# EUROPÄISCHE PATENTSCHRIFT

(11) **EP 0 943 524 B1**
(45) Veröffentlichungstag und Bekanntmachung des Hinweises auf die Patenterteilung: **10.04.2002**
(21) Anmeldenummer: 99102951.3
(22) Anmeldetag: 13.02.1999
(51) Int. Cl.: B62D 1/18, F16D 1/064

(54) **Lenksäulenanordnung für ein Kraftfahrzeug**
Steering column for a motor vehicle
Colonne de direction pour véhicule à moteur

(30) Priorität: 19.03.1998 DE 19812172
(43) Veröffentlichungstag der Anmeldung: 22.09.1999
(73) Patentinhaber: DaimlerChrysler AG, 70567 Stuttgart (DE)
(72) Erfinder: Link, Manfred, 71334 Waiblingen (DE)

(56) Entgegenhaltungen:
- EP-A- 0 152 311
- EP-A- 0 502 296
- EP-A- 0 634 313
- DE-C- 19 524 196
- FR-A- 2 594 504
- US-A- 3 768 845

## Beschreibung

Die Erfindung betrifft eine Lenksäulenanordnung für ein Kraftfahrzeug mit einem inneren Mantelrohr, das innerhalb eines äußeren, ortsfest angeordneten Mantelrohres mittels einer Verstelleinrichtung teleskopförmig verschiebbar gelagert ist, wobei die Verstellvorrichtung ein achsparallel zum inneren Mantelrohr verlaufendes, längserstrecktes Stellglied aufweist, das mit einem Stirnende über einen auf dem Außenmantel des inneren Mantelrohres festgelegten Halter an dem inneren Mantelrohr ortsfest angreift.

Eine solche Lenksäulenanordnung ist aus dem gattungsgemässen Dokument DE 195 24 196 C1 bekannt. Die bekannte Lenksäulenanordnung weist ein inneres Mantelrohr auf, das in einem äußeren, ortsfest im Kraftfahrzeug festgelegten äußeren Mantelrohr teleskopförmig verschiebbar gelagert ist. Um eine automatische Verstellung des inneren Mantelrohres relativ zum äußeren Mantelrohr zu ermöglichen, ist ein durch einen elektrischen Stellmotor beaufschlagter Spindeltrieb vorgesehen. Der Spindeltrieb weist eine außen längs des äußeren Mantelrohres verlaufende Gewindespindel auf, die mit einem Stirnende ortsfest an einem auf einem Außenmantel des inneren Mantelrohres festgelegten Halter fixiert ist. Die Gewindespindel greift in eine Gewindemutter ein, die am äußeren Mantelrohr drehbeweglich gelagert ist. Die Gewindemutter weist eine Außenverzahnung auf, mittels derer sie mit einem Zahnradgetriebe kämmt, das durch den elektrischen Stellmotor angetrieben ist. Eine Drehung der Gewindemutter durch den Stellmotor bewirkt somit eine Axialverschiebung der Gewindespindel und damit aufgrund der Kraftübertragung über den Halter auch eine Axialverschiebung des inneren Mantelrohres. Die Fixierung des Halters auf dem Außenmantel des inneren Mantelrohres ist nicht näher ausgeführt.

Aufgabe der Erfindung ist es, eine Lenksäulenanordnung der eingangs genannten Art zu schaffen, die eine platzsparende und sichere Festlegung des Stellgliedes am inneren Mantelrohr ermöglicht.

Diese Aufgabe wird dadurch gelöst, daß der Halter als ringförmige Manschette gestaltet ist, die mittels einer zwischen dem Außenmantel des inneren Mantelrohres und dem Innenumfang der Manschette positionierten Ringanordnung axial formschlüssig und in Umfangsrichtung reibschlüssig auf dem inneren Mantelrohr festgelegt ist. Die Ringanordnung zwischen der Manschette und dem Außenmantel des Mantelrohres kann ein- oder mehrteilig ausgeführt sein. Sie kann einstückig am Außenmantel des inneren Mantelrohres angeformt oder auch auf den Außenmantel aufgesetzt sein. Die erfindungsgemäße Lösung ermöglicht eine äußerst platzsparende Festlegung des Halters für das Stellglied, wobei insbesondere keine radial nach außen ragenden Befestigungselemente vorgesehen sind. Die Fixierung erfolgt vielmehr innerhalb der Manschette, so daß die Fixiermittel in Form der Ringanordnung durch die Manschette verdeckt sind. Die axial formschlüssige und in Umfangsrichtung reibschlüssige Festlegung der Manschette ermöglicht trotz platzsparender Bauweise eine sichere Kraftübertragung der auftretenden Kräfte. Dabei ist die erfindungsgemäße Festlegung so stabil ausgeführt, daß auch bei einem Fahrzeugaufprall keine Verschiebung der Manschette auf dem Mantelrohr aufgrund entsprechend eingeleiteter Aufprallkräfte erfolgt. Die reibschlüssige Festlegung in Umfangsrichtung hat die Aufgabe, in Umfangsrichtung auftretende Betätigungskräfte eines Schaltermoduls aufzunehmen, das einen Blink- und Tempomatfunktionen sowie andere Funktionen aufweisenden Schalthebel beinhaltet. Das Schaltermodul ist vor. der Lenkradseite her auf das innere Mantelrohr aufschiebbar und übergreift die Manschette zumindest teilweise, wobei ein Formschluß zwischen Manschette und Schaltermodul in Umfangsrichtung erzielt wird. Neben der axialen Sicherung der Manschette auf dem inneren Mantelrohr auch gegen Aufprallbelastungen dient die Manschette somit auch als Abstützung in Umfangsrichtung für das Schaltermodul.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt in einem Halbschnitt ein eine Lenkspindel lagerndes inneres Mantelrohr einer Ausführungsform einer erfindungsgemäßen Lenksäulenanordnung,
- Fig. 2: eine stirnseitige Ansicht des Mantelrohres nach Fig. 1 in Richtung des Pfeiles II in Fig. 1,
- Fig. 3: in vergrößerter Darstellung einen Ausschnitt des Mantelrohres nach Fig. 1 auf Höhe der Festlegung einer Manschette zür Halterung eines Stellgliedes, und
- Fig. 4: in weiter vergrößerter Darstellung einen Teil einer Ringanordnung zur Festlegung der Manschette nach Fig. 3 auf dem Mantelrohr nach den Fig. 1 und 3.

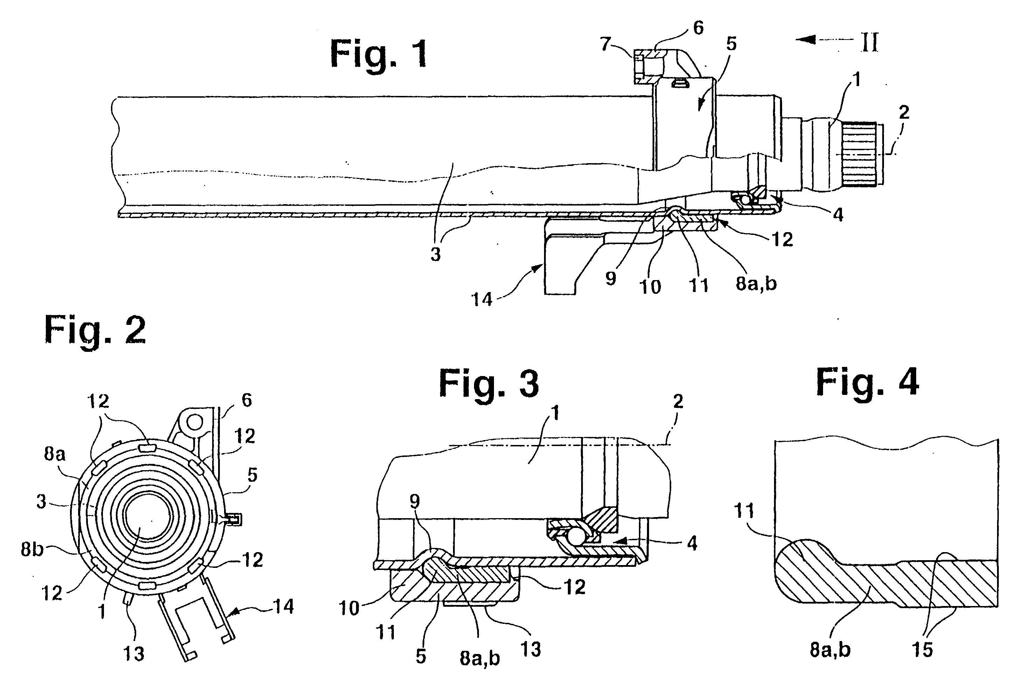

Eine Lenksäulenanordnung für einen Personenkraftwagen entspricht vom grundsätzlichen Aufbau her einer Anordnung, wie sie aus der DE 195 24 196 C1 bekannt ist. Die Lenksäulenanordnung weist gemäß den Fig. 1 bis 3 eine Lenkspindel 1 auf, die um eine Lenkachse 2 in einem inneren Mantelrohr 3 mittels entsprechender Lagerungen 4 drehbeweglich gelagert ist. Auf das in Fig. 1 dargestellte Stirnende der Lenkspindel 1 ist ein Lenkrad aufsetzbar, so daß dieses Stirnende den in den Fahrzeuginnenraum des Personenkraftwagens hineinragenden Teil der Lenkspindel 1 aufweist. Das innere Mantelrohr 3 ist in nicht dargestellter, jedoch durch die DE 195 24 196 C1 allgemein bekannter Weise in einem äußeren Mantelrohr axial verschiebbar gelagert. Um die teleskopförmige axiale Verschiebung des inneren Mantelrohres 3 relativ zum äußeren Mantelrohr zu bewirken, weist die Lenksäulenanordnung einen Spindeltrieb auf, wie er grundsätzlich ebenfalls bereits aus der DE 195 24 196 C1 bekannt ist. Der Spindeltrieb weist eine zumindest in einem Teilbereich als Gewindespindel ausgeführte Stellspindel auf, die mittels einer am äußeren Mantelrohr drehbeweglich gelagerten Gewindemutter, einem entsprechenden Zahnradgetriebe und einem elektrischen Stellmotor achsparallel zur Lenkachse 2 linearbeweglich angeordnet ist. Ein dem inneren Mantelrohr 3 zugeordnetes Stirnende der Stellspindel greift mittels eines entsprechenden Vierkantprofiles drehfest in eine korrespondierende, viereckige Aufnahmeprofilierung 7 einer Halterung 6 ein, die als einstückiger Teil einer ringförmigen Manschette 5 auf dem Außenmantel des inneren Mantelrohres 3 festgelegt ist. Die Manschette 5 überträgt entsprechende Zug- und Druckbewegungen der Stellspindel auf das innere Mantelrohr 3, so daß die gewünschten Axialverschiebungen erreicht werden. Die Manschette 5 stellt einschließlich der Halterung 6 beim dargestellten Ausführungsbeispiel ein" Leichtmetallgußteil dar. Die ringförmige Manschette 5 umgreift das innere Mantelrohr 3 in nachfolgend noch näher beschriebener Weise umlaufend koaxial zur Lenkachse 2. An der Manschette 5 einstückig angeformt ist eine Steckeraufnahme 14, in der eine Steckkupplung eines Schaltermoduls positionierbar ist, wodurch ein korrespondierender Stecker in diese Steckkupplung einsteckbar ist. Die Steckverbindung gewährleistet elektronische oder elektrische Daten- und Signalübertragung.

Zur Festlegung der Manschette 5 auf dem Außenmantel des inneren Mantelrohres 3 ist eine durch zwei Halbschalen 8a, 8b gebildete Ringanordnung vorgesehen. Die beiden Halbschalen 8a, 8b sind identisch gestaltet und weisen gemäß den Fig. 3 und 4 als Radialprofilierung einen kreisabschnittförmig profilierten Ringrand 11 auf, der radial nach innen von jeder Halbschale 8a, 8b abragt. Als korrespondierende Außenprofilierung ist diesem Ringrand 11 im Mantelrohr 3 eine Sicke 9 zugeordnet, in die der Ringrand 11 jeder Halbschale 8a, 8b axial formschlüssig eingebettet ist. Beide Halbschalen weisen zudem gemäß Fig. 4 im Bereich ihres dem Ringrand 11 gegenüberliegenden Randabschnittes einen verdickten Profilabschnitt 15 auf, durch den sowohl die Außenkontur als auch die Innenkontur jeder Halbschale 8a, 8b radial abgestuft gestaltet ist.

Die Manschette 5 weist einen Innendurchmesser auf, der größer ist als der Außendurchmesser des Außenmantels des inneren Mantelrohres 3. Die Manschette 5 wird von einer dem herausragenden Stirnende der Lenkspindel 1 gegenüberliegenden Seite her auf das Mantelrohr 3 aufgeschoben und axial auf die beiden bereits in der Sicke 9 positionierten Halbschalen 8a, 8b aufgepreßt. Die verdickten Profilabschnitte 15 der beiden Halbschalen 8a, 8b erhöhen dabei den Reibschluß der Preßpassung. Die Manschette 5 wird dabei so weit axial aufgepreßt, bis eine Ringschulter 10 der Manschette 5 an dem Ringrand 11 jeder Halbschale 8a, 8b axial zur Anlage kommt. Diese Ringschulter 10 erstreckt sich radial nach innen, wobei ihr Innendurchmesser geringfügig größer ist als der Außendurchmesser des inneren Mantelrohres 3. In Aufpreßrichtung liegt die Ringschulter 10 der Manschette 5 daher axial formschlüssig an dem Ringrand 11 jeder Halbschale 8a, 8b an. Um auch in entgegengesetzter axialer Richtung zusätzlich zu dem durch die Preßpassung erzielten Reibschluß einen Formschluß zu erzielen, ist der in diesem Bereich überstehende Stirnrand der Manschette 5 durch insgesamt sechs bis zehn über den Umfang der Manschette 5 verteilte Stemmnasen 12 mit den beiden Halbschalen 8a, 8b je nach ausgeführtem Beispiel verstemmt. Die Verstemmungen weisen je nach Ausführungsbeispiel Mindestauspreßkräfte von > 15 kN auf.

Der durch die verdickten Profilabschnitte 15 der beiden Halbschalen 8a, 8b erzielte Reibschluß bewirkt auch einen sicheren Halt der Manschette 5 auf dem Mantelrohr 3 in Umfangsrichtung. Dieser Reibschluß in Umfangsrichtung, der im übrigen auch durch die weiteren Anlageflächen zwischen den Halbschalen 8a, 8b und dem Innenumfang der Manschette 5 bzw. dem Außenmantel des Mantelrohres 3 einschließlich der Sicke 9 erzielt wird, ermöglicht eine sichere Abstützung von in Umfangsrichtung auftretenden Betätigungskräften eines Schaltermoduls. Dieses Schaltermodul wird von der Lenkradseite her auf das innere Mantelrohr 3 aufgesteckt und übergreift einen Mitnahmezapfen 13 an der Manschette 5 in Umfangsrichtung formschlüssig. Das Schaltermodul weist einen radial abragenden Schalthebel auf, der als Kombischalter gestaltet ist und neben einer Blinkfunktion auch Tempomat- oder Lichtfunktionen aktivieren kann. Eine entsprechende Betätigung dieses Schalthebels führt jedoch zu Umfangskräften, die eine Verdrehung des Schaltermoduls auf dem Mantelrohr 3 bewirken könnten. Die in Umfangsrichtung sichere Festlegung der Manschette 5 und die Abstützung durch den einstückig angeformten Mitnahmesteg 9 ermöglichen eine problemlose und verdrehsichere Handhabung des Schaltermoduls.

Die axial formschlüssige Festlegung der Manschette 5 auf dem Mantelrohr 3 ist derart stabil ausgeführt, daß auch durch Fahrzeugaufprallbelastungen hervorgerufene Axialkräfte keine Verschiebung der Manschette 5 auf dem Mantelrohr 3 bewirken.

## Patentansprüche

1. Lenksäulenanordnung für ein Kraftfahrzeug mit einem inneren Mantelrohr (3), das innerhalb eines äußeren, ortsfest angeordneten Mantelrohres mittels einer Verstellvorrichtung teleskopförmig verschiebbar gelagert ist, wobei die Verstellvorrichtung ein achsparallel zum inneren Mantelrohr verlaufendes, längserstrecktes Stellglied aufweist, das mit einem Stirnende über einen auf dem Außenmantel des inneren Mantelrohres festgelegten Halter an dem inneren Mantelrohr ortsfest angreift,
**dadurch gekennzeichnet,**
**daß** der Halter als ringförmige Manschette (5) gestaltet ist, die mittels einer zwischen dem Außenmantel des inneren Mantelrohres (3) und dem Innenumfang der Manschette (5) positionierten Ringanordnung (8a, 8b) axial formschlüssig und in Umfangsrichtung reibschlüssig auf dem inneren Mantelrohr (3) festgelegt ist.

2. Lenksäulenanordnung nach Anspruch 1,
**dadurch gekennzeichnet,**
**daß** die Ringanordnung (8a, 8b) radial nachgiebig ausgeführt und axial formschlüssig auf dem Außenmantel des Mantelrohres (3) fixierbar ist.

3. Lenksäulenanordnung nach Anspruch 1 oder 2,
**dadurch gekennzeichnet,**
**daß** die Ringanordnung (8a, 8b) durch wenigstens einen achsparallelen Schlitz radial nachgiebig aufgeteilt ist.

4. Lenksäulenanordnung nach Anspruch 2 oder 3,
**dadurch gekennzeichnet,**
**daß** die Ringanordnung in zwei Halbschalen (8a, 8b) unterteilt ist, die mit jeweils einer sich in Umfangsrichtung erstreckenden Radialprofilierung (11) versehen sind, die formschlüssig in eine umlaufende, korrespondierende Außenprofilierung (9) des Mantelrohres (3) eingreifen.

5. Lenksäulenanordnung nach Anspruch 4,
**dadurch gekennzeichnet,**
**daß** die Halbschalen (8a, 8b) mit wenigstens einem umlaufend verdickten Profilabschnitt (15) zur Erhöhung des Reibschlusses zwischen Mantelrohr (3) und Manschette (5) versehen sind.

6. Lenksäulenanordnung nach einem der vorhergehenden Ansprüche,
**dadurch gekennzeichnet,**
**daß** die Manschette (5) mit einer Ringschulter (10) zur axialen Sicherung der Manschette (5) auf der Ringanordnung (8a, 8b) versehen ist.

7. Lenksäulenanordnung nach Anspruch 6,
**dadurch gekennzeichnet,**
**daß** die Manschette (5) zusätzlich zu dem Reibschluß mit der Ringanordnung verstemmt ist.

## Claims

1. Steering column assembly for a motor vehicle, having an inner casing tube (3) which is mounted so as to be telescopically slidable in an outer, stationary casing tube by means of an adjusting mechanism, the adjusting mechanism having a longitudinally extending adjusting member running axially parallel with the inner casing tube, a front end of which engages with and is stationary on the inner casing tube by means of a holder fixed to the external casing of the inner casing tube,
**characterised in that**
the holder is an annular collar (5), which is fixed onto the internal casing tube (3), axially in a positive fit and in the circumferential direction in a frictional fit, by means of a ring assembly (8a, 8b) positioned between the external casing of the inner casing tube (3) and the internal circumference of the collar (5).

2. Steering column assembly as claimed in claim 1,
**characterised in that**
the ring assembly (8a, 8b) is of a radially flexible design and can be fixed on the external casing of the casing tube (3) in an axial positive fit.

3. Steering column assembly as claimed in claim 1 or 2,
**characterised in that**
the ring assembly (8a, 8b) is radially flexible, being split by means of at least one axially parallel slit.

4. Steering column assembly as claimed in claim 2 or 3,
**characterised in that**
the ring assembly is divided into two half shells (8a, 8b), each being provided with a radial profiling (11) extending in the circumferential direction, which engages in a positive fit in a circumferential, complementary external profiling (9) of the casing tube (3).

5. Steering column assembly as claimed in claim 4,
**characterised in that**
the half shells (8a, 8b) are provided with at least one circumferential thicker profiled section (15) to increase the frictional connection between casing tube (3) and collar (5).

6. Steering column assembly as claimed in one of the preceding claims,
**characterised in that**
the collar (5) is provided with an annular shoulder (10) to secure the collar (5) axially on the ring assembly (8a, 8b).

7. Steering column assembly as claimed in claim 6,
**characterised in that**
in addition to the frictional connection, the collar (5) is caulked with the ring assembly.

## Revendications

1. Dispositif de colonne de direction pour un véhicule automobile comportant un tube enveloppe intérieur (3) qui est monté de manière à être déplaçable de façon télescopique, au moyen d'un dispositif de réglage, à l'intérieur d'un tube enveloppe extérieur monté fixe, le dispositif de réglage comportant un organe de réglage qui s'étend longitudinalement et dont l'axe est parallèle au tube enveloppe intérieur et qui attaque de façon fixe par une extrémité frontale le tube enveloppe extérieur par l'intermédiaire d'un support monté fixe sur l'enveloppe extérieure du tube enveloppe intérieur, **caractérisé en ce que** le support est agencé sous la forme d'un manchon de forme annulaire (5), qui est fixé sur le tube enveloppe intérieur axialement selon une liaison par formes complémentaires et selon une liaison à frottement dans la direction circonférentielle, au moyen d'un dispositif de bagues (8a,8b) positionné entre l'enveloppe extérieur du tube enveloppe intérieur (3) et la périphérie intérieure du manchon (5).

2. Dispositif de colonne de direction selon la revendication 1, **caractérisé en ce que** le dispositif de bagues (8a,8b) est agencé de manière à être flexible radialement et peut être fixé axialement selon une liaison par formes complémentaires sur l'enveloppe extérieure du tube enveloppe (3).

3. Dispositif de colonne de direction selon la revendication 1 ou 2, **caractérisé en ce que** le dispositif de bagues (8a,8b) est divisé de manière à pouvoir fléchir axialement par une fente parallèle à l'axe.

4. Dispositif de colonne de direction selon la revendication 2 ou 3, **caractérisé en ce que** le dispositif de bagues est divisé en deux demi-coques (8a,8b), qui comportent chacune un profilé radial (11) qui s'étend dans la direction circonférentielle, les profilés radiaux s'engageant selon une liaison par formes complémentaires dans un profilé extérieur circonférentiel correspondant (9) du tube enveloppe (3).

5. Dispositif de colonne de direction selon la revendication 4, **caractérisé en ce que** les demi-coques (8a, 8b) sont équipées au moins d'une section profilée (15) épaissie circonférentiellement, servant à accroître le frottement entre le tube enveloppe (3) et le manchon (5).

6. Dispositif de colonne de direction selon l'une des revendications précédentes, **caractérisé en ce que** le manchon (5) est équipé d'un épaulement annulaire (10) servant à bloquer axialement le manchon (5) sur le dispositif de bagues (8a, 8b).

7. Dispositif de colonne de direction selon la revendication 6, **caractérisé en ce que** le manchon (5) est en outre maté pour établir la liaison par frottement avec le dispositif de bagues.
